# EUROPÄISCHE PATENTSCHRIFT

(11) **EP 3 684 678 B1**
(45) Veröffentlichungstag und Bekanntmachung des Hinweises auf die Patenterteilung: **22.06.2022**
(21) Anmeldenummer: 18755770.7
(22) Anmeldetag: 10.08.2018
(51) Int. Cl.: B62J 1/08

(54) **SATTELBEFESTIGUNGSEINRICHTUNG**
SADDLE MOUNTING STRUCTURE
MOYEN DE FIXATION DE SELLE

(30) Priorität: 20.09.2017 DE 102017121776
(43) Veröffentlichungstag der Anmeldung: 29.07.2020
(73) Patentinhaber: Hypervital AG, 9404 Rorschacherberg (CH)
(72) Erfinder: SCHYMURA, Martin, 93080 Pentling (DE); BAYER, Thomas, 87471 Durach (DE)
(74) Vertreter: Hannke, Christian
(86) Internationale Anmeldenummer: PCT/EP2018/071716
(87) Internationale Veröffentlichungsnummer: WO 2019/057390

(56) Entgegenhaltungen:
- DE-U1- 29 507 564
- DE-U1-202006 012 581
- US-A1- 2008 143 153
- US-A1- 2011 254 328
- US-B1- 6 174 027
- US-B1- 6 942 290

## Beschreibung

Die Erfindung betrifft eine Sattelbefestigungseinrichtung zur lösbaren Schnellbefestigung eines Stützelements, insbesondere eines Sattels, an einer Trägervorrichtung, insbesondere einer Sattelstütze, eines Fahrzeugs, umfassend eine Klemmeinrichtung, welche mindestens ein Klemmelement zum lösbaren Befestigen mindestens einer Sattelstrebe an der Trägervorrichtung sowie mindestens ein Klemmstützelement zum mechanischen Abstützen des Klemmelements aufweist.

Der Ergonomie von Fahrrädern und Fahrradsätteln wird zunehmend eine hohe Bedeutung beigemessen. War dieses Thema früher weitestgehend auf den Bereich des Leistungssports beschränkt, besteht mittlerweile auch im Bereich des Breitensports und der Freizeitgestaltung eine hohe Nachfrage nach ergonomisch korrekt eingestellten Fahrrädern bzw. Fahrradsätteln. Durch die korrekte ergonomische Anpassung eines Fahrrades an den Fahrradbesitzer bzw. Kunden im Fachgeschäft können Überbelastungen und Fehlhaltungen vermieden werden. Dies reduziert zum einen Beschwerden, beispielsweise Gesäßschmerzen, während des Fahrradfahrens und wirkt außerdem vorbeugend gegenüber Verletzungen oder Verschleißerscheinungen. Auch ist es möglich vorhandene Erkrankungen oder Einschränkungen des Kunden bei der Anpassung des Fahrrades an seinen Besitzer zu berücksichtigen.

Bei der ergonomischen Anpassung eines Fahrrads sind neben der Fahrradgeometrie die Kontaktpunkte zwischen Mensch und Fahrrad, wie Lenkergriffe, Pedale und Sattel, von sehr hoher Bedeutung. Besonders häufig treten Probleme bei der Findung des passenden Sattels und seiner korrekten Einstellung auf. Ein unpassender Sattel kann beispielsweise zu Scheuer- sowie Druckstellen im Sitzbereich oder zum Abklemmen von Blutgefäßen oder auch Nerven führen, wodurch z. B. Körperteile oder -bereiche vorrübergehend taub werden können ("einschlafen").

Für die Findung eines passenden Fahrradsattels sind, neben einfach zu ermittelnden Größen, wie beispielsweise dem Sitzknochenabstand, die individuelle Anatomie, die individuelle Sitzposition und vor allem das persönliche Wohlbefinden des Fahrradbesitzers bzw. Kunden essentiell. Daher ist es notwendig, dass der Kunde im Fachgeschäft auf einfache und schnelle Weise verschiedene Fahrradsättel ausprobieren kann.

Herkömmliche Sattelbefestigungseinrichtungen sind für diesen Zweck schlecht geeignet, da für die Montage/Demontage eines Sattels an einem Fahrrad Werkzeug benötigt wird und zur Befestigung des Sattels an der Sattelbefestigungseinrichtung letztere in der Regel zerlegt werden muss. Außerdem entstehen bei der Befestigung eines Sattels mittels einer herkömmlichen Sattelbefestigungseinrichtung häufig Kratzspuren in der Oberfläche der Sattelstreben, wodurch ein derart getesteter Sattel nur noch schwer verkäuflich ist. Um dennoch alle Sattelmodelle im Fachgeschäft zum Test anbieten zu können, müsste der Fachhändler von jedem Sattelmodell ein unverkäufliches Testexemplar anschaffen, was z. B. durch die Konkurrenz des Fernabsatzgeschäfts finanziell meist nicht tragbar ist.

Neben der Wahl des passenden Sattelmodells, ist auch die korrekte Positionierung des Sattels am Fahrrad essentiell für die korrekte Ergonomie. Hier ist zwischen der horizontalen Positionierung des Sattels entlang der Fahrradlängsachse (definiert den Abstand Sattel-Lenker, auch als Sattelversatz bezeichnet) und der Sattelneigung, also des Winkels zwischen Sitzfläche und Sattelstütze bzw. Sitzrohr des Fahrradrahmens, zu unterscheiden. Beides ist unabhängig voneinander bzw. iterativ und außerdem millimetergenau bzw. gradgenau einzustellen.

Für diesen Zweck sind herkömmliche Sattelbefestigungseinrichtungen ebenfalls nicht geeignet, da beim Lösen der Befestigungsschrauben sowohl die Fixierung der horizontalen Position als auch der Sattelneigung gleichzeitig gelöst werden. Somit ist es nur mit aufwendigen Markierungen möglich die Einstellung von Sattelposition und Neigung unabhängig voneinander vorzunehmen.

Eine gattungsgemäße Sattelbefestigungseinrichtung ist aus der US 6,174,027 B1 bekannt.

Aufgabe der vorliegenden Erfindung ist es eine Sattelbefestigungseinrichtung zur Verfügung zu stellen mit welcher in einfacher und schneller Weise verschiedene Sättel an einem Fahrrad montiert und wieder demontiert werden können und es darüber hinaus möglich ist die Sattelposition und Neigung werkzeugfrei, ausreichend genau und unabhängig voneinander einzustellen.

Diese Aufgabe wird gelöst durch eine Sattelbefestigungseinrichtung zur lösbaren Schnellbefestigung eines Stützelements, insbesondere eines Sattels, an einer Trägervorrichtung, insbesondere einer Sattelstütze, eines Fahrzeugs, umfassend eine Klemmeinrichtung, welche mindestens ein Klemmelement zum lösbaren Befestigen mindestens einer Sattelstrebe an der Trägervorrichtung sowie mindestens ein Klemmstützelement zum mechanischen Abstützen des Klemmelements aufweist. Die Erfindung ist dadurch gekennzeichnet, dass das Klemmelement über eine Achse fest mit dem Klemmstützelement verbunden ist und relativ zu dem Klemmstützelement in eine Fixierposition bringbar ist, in welcher zumindest eine Sattelstrebe zwischen dem Klemmelement und dem Klemmstützelement eingeklemmt ist, wobei das Klemmelement, insbesondere werkzeugfrei, in eine Lockerungsposition bringbar ist.

Das Stützelement, im Folgenden als Sattel bezeichnet, verfügt über mindestens eine, in der Regel aber zwei Sattelstreben an der Unterseite. An diesen Sattelstreben wird der Sattel, durch Klemmung zwischen Klemmelement und Klemmstützelement, an der Klemmeinrichtung der Sattelbefestigungseinrichtung befestigt und somit am Fahrzeug befestigt. Bei dem Fahrzeug handelt es sich vorzugsweise, aber nicht ausschließlich, um Fahrräder, Elektrofahrräder (E-Bikes), Mountainbikes, Rennräder, Lastenräder, Falträder, Dreiräder, Laufräder oder Trimmräder wie z.B. Hometrainer oder Ergometer

Die feste Verbindung des Klemmelements mit dem Klemmstützelement über die Achse, ist insbesondere auch in der Lockerungsposition gegeben. Die Zerlegung der Sattelbefestigungseinrichtung ist für Wartungs- oder Reparaturzwecke zwar möglich, für die Montage/Demontage eines Sattels jedoch nicht notwendig wodurch ein einfacher und schneller Sattelaustausch durchführbar ist.

Gemäß zumindest einer weiteren Ausführungsform ist die Sattelbefestigungseinrichtung dadurch gekennzeichnet, dass das Klemmelement drehbar um zumindest eine erste, mit dem Klemmstützelement verbundene Drehachse gelagert ist.

Mit Hilfe der ersten Drehachse ist das Klemmelement gegenüber dem Klemmstützelement rotierbar. Diese Rotation ermöglicht den Wechsel zwischen Fixier- und Lockerungsposition.

Gemäß zumindest einer weiteren Ausführungsform ist die Sattelbefestigungseinrichtung dadurch gekennzeichnet, dass die Seitenflächen des Klemmelements in mindestens einer Richtung schmaler beabstandet sind als der Abstand der Sattelstreben des Sattels und in mindestens einer Richtung breiter beabstandet sind als der Abstand der Sattelstreben des Sattels.

In der Fixierposition sind die, breiter als der Abstand der Sattelstreben beabstandeten, Seitenflächen des Klemmelements parallel zur Fahrzeuglängsachse ausgerichtet. Dadurch werden die Sattelstreben zwischen dem Klemmelement, welches in dieser Position breiter als der Abstand der Sattelstreben ist, und dem Klemmstützelement befestigend eingeklemmt.

In der Lockerungsposition sind die, schmaler als der Abstand der Sattelstreben beabstandeten, Seitenflächen des Klemmelements parallel zur Fahrzeuglängsachse ausgerichtet. In dieser Position ist es möglich den Sattel von der Klemmeinrichtung abzuheben, da das Klemmelement in dieser Position schmaler als der Abstand der Sattelstreben ist und die Sattelstreben somit am Klemmelement vorbeiführbar sind.

Das Klemmelement hat somit bevorzugt eine rechteckige Form mit einer Längsrichtung entlang der längeren Kanten der rechteckigen Form. Die kürzeren Kanten sind dabei bevorzugt kürzer als der Abstand der Sattelstreben und die längeren Kanten länger als der Abstand der Sattelstreben. In der Fixierposition ist die Längsachse des Klemmelements horizontal senkrecht zur Fahrzeuglängsachse ausgerichtet. In der Lockerungsposition ist die Längsachse des Klemmelements parallel zur Fahrzeuglängsachse ausgerichtet. Der Wechsel zwischen Fixier- und Lockerungsposition erfolgt dabei bevorzugt durch eine Rotation des Klemmelements um 90° um die erste Drehachse.

Gemäß der Erfindung ist die Sattelbefestigungseinrichtung dadurch gekennzeichnet, dass das Klemmelement zumindest einen ersten Hebel aufweist mit welchem das Klemmelement von der Fixierposition in die Lockerungsposition und/oder von der Lockerungsposition in die Fixierposition bringbar ist.

Der erste Hebel ist erfindungsgemäß fest mit der ersten Drehachse verbunden, so dass durch Betätigung des ersten Hebels die erste Drehachse rotierbar ist. Der erste Hebel ist bevorzugt unterhalb des Klemmstützelements angeordnet, so dass der erste Hebel auch bei montiertem Sattel gut bedienbar ist. Des Weiteren ist die erste Drehachse bevorzugt durch das Klemmstützelement, welches bevorzugt zwischen dem ersten Hebel und dem Klemmelement angeordnet ist, hindurchgeführt. Diese Durchführung kann als Lager ausgeführt sein um die reibungsreduzierte Rotation der ersten Drehachse innerhalb der Durchführung durch das Klemmstützelement zu ermöglichen. Es ist aber ebenfalls denkbar, dass der erste Hebel zwischen Klemmelement und Klemmstützelement oder oberhalb des Klemmelements angeordnet ist und/oder das Klemmelement unterhalb des Klemmstützelements angeordnet ist. Es ist denkbar, dass der erste Hebel eine Griffvorrichtung zur besseren Bedienbarkeit aufweist. Beispielsweise kann das Ende des Hebels eine Kugel oder einen Griffbereich aufweisen. Dieser Griffbereich ist vorzugsweise gummiert oder mit anderen geeigneten Griffmaterialien beschichtet, umwickelt oder beklebt oder besteht direkt aus einem geeigneten Griffmaterial.

Gemäß zumindest einer weiteren Ausführungsform ist die Sattelbefestigungseinrichtung dadurch gekennzeichnet, dass das Klemmelement eine obere Grundfläche sowie eine oval, oder vieleckig mit abgerundeten Kanten geformte, untere Grundfläche aufweist, wobei der Übergang zwischen der oberen und der oval, oder vieleckig mit abgerundeten Kanten geformten, unteren Grundfläche eine Konusfläche ist.

Diese Ausführungsform ist insofern bevorzugt, als dass durch die Konusfläche und die Ausformung der unteren Grundfläche ohne Ecken und Kanten die Klemmfläche und insbesondere der Übergang der Klemmfläche zu den, schmaler als die Sattelstreben beabstandeten, Seitenflächen stetig gerundet oder gratlos ausgeführt ist und so eine Beschädigung der Sattelstreben durch den Klemmvorgang vermieden oder reduziert wird.

Gemäß zumindest einer weiteren Ausführungsform ist die Sattelbefestigungseinrichtung dadurch gekennzeichnet, dass die Konusfläche des Klemmelements konvex gewölbt ist.

Durch die konvex gewölbte Konusfläche wird die Klemmfläche zwischen Klemmelement und Sattelstrebe minimiert. Eine Minimierung der Klemmfläche ist insofern erstrebenswert, da so die Gleitreibung zwischen Klemmelement und Sattelstrebe bei der Rotation des Klemmelements von der Lockerungs- in die Fixierposition bzw. von der Fixierposition in die Lockerungsposition reduziert ist und eine Beschädigung der Sattelstreben weitergehend vermieden wird. Außerdem ist es denkbar, dass die Konusoberfläche oder das Klemmelement oder das Klemmstützelement selbst mit einem zur Reduzierung der Gleitreibung geeignetem Mittel oder Material wie beispielsweise Teflon, Bornitird, einem Kunststoff, wie z. B. Polyoxymethylen (POM), Nass- oder Trockenschmiermittel beschichtet ist oder ganz daraus gefertigt ist.

Weiterhin kann die Konusfläche auch konkav oder gerade ausgeformt sein.

Zur Gewährleistung der Stabilität ist das Klemmstützelement bevorzugt zumindest teilweise komplementär zur Form der Sattelstreben ausgeformt. Insbesondere weist das Klemmstützelement bevorzugt eine äußere, seitliche, ähnlich einer Führungsschiene ausgeformte Form auf, welche die Sattelstreben zumindest teilweise umschließt.

Gemäß zumindest einer weiteren Ausführungsform ist die Sattelbefestigungseinrichtung dadurch gekennzeichnet, dass die Drehachse der Klemmeinrichtung ein Gewinde umfasst.

Das Gewinde ist dabei bevorzugt in der ersten Drehachse integriert, so dass bei Betätigung des ersten Hebels das Klemmelement zusätzlich zu der Rotationsbewegung eine translatorische Bewegung ausführt. Bevorzugt ist die translatorische Bewegung eine Hoch-Tief-Bewegung, so dass das Klemmelement bei der Überführung von der Fixierposition in die Lockerungsposition, bzw. von der Lockerungs- in die Fixierposition, beispielsweise nach oben von den Sattelstreben wegbewegbar ist, bzw. von oben nach unten auf die Sattelstreben zubewegbar ist und eine Beschädigung der Sattelstreben durch Gleitreibung des Klemmelements weitergehend vermieden wird.

Gemäß der Erfindung ist die Sattelbefestigungseinrichtung dadurch gekennzeichnet, dass die Klemmeinrichtung auf dem Lastarm eines zweiten Hebels montiert ist, wobei der zweite Hebel drehbar, um zumindest eine zweite Drehachse, an der Trägervorrichtung befestigt ist.

Gemäß der Erfindung ist die Sattelbefestigungseinrichtung dadurch gekennzeichnet, dass der Kraftarm des zweiten Hebels eine Drehwinkeleinstellvorrichtung umfasst, mit welcher der Winkel zwischen Hebellängsachse und Trägervorrichtungslängsachse einstellbar ist.

Vorzugsweise ist der zweite Hebel als zweiarmiger Hebel, bzw. Wippe, ausgeführt. Wobei der Kraftarm länger als der Lastarm ausgebildet ist, was die zur Winkelverstellung benötigte Kraft reduziert. Vorzugsweise weist der zweite Hebel eine u-förmige Form auf, wobei die zweite Drehachse im gebogenen Bereich der U-Form, bzw. im Bereich der Ecken bei einer eckigen U-Form, angeordnet ist. Durch die beschriebene Ausformung wird ein Hineinragen des zweiten Hebels in den Einstiegsbereich eines Damenfahrrads bzw. eine Kollision mit dem Oberrohr eines Herrenfahrrads vermieden.

Gemäß zumindest einer weiteren Ausführungsform ist die Sattelbefestigungseinrichtung dadurch gekennzeichnet, dass die Drehwinkeleinstellvorrichtung zumindest einen ersten sowie einen zweiten drehbar gelagerten Bolzen aufweist, wobei der erste, drehbar gelagerte Bolzen am zweiten Hebel und der zweite, drehbar gelagerte Bolzen an der Trägervorrichtung befestigt ist und beide Bolzen durch eine Gewindestange, insbesondere ausgestattet mit einem Drehgriff, verbunden sind, mit welcher die Bolzen relativ zueinander bewegbar sind.

Bevorzugt entspricht die Drehachse der drehbar gelagerten Bolzen der Bolzenlängsachse. Die Gewindestange ist durch den ersten oder zweiten drehbar gelagerten Bolzen senkrecht zur Bolzenlängsachse hindurchgeführt, wobei die Durchführung des ersten oder zweiten Bolzens bevorzugt ein Innengewinde komplementär zum Gewinde der Gewindestange aufweist. Bevorzugt ist die Gewindestange am anderen Bolzen gegenüber radialer und axialer Bewegung fixiert, beispielsweise mit Hilfe eines Radiaxlagers.

Durch Rotation der Gewindestange mit Hilfe des Drehgriffs, welcher auch als Drehrad oder Hebel ausgeführt sein kann, ist die Position des, mit einem Innengewinde ausgestatteten, Bolzens auf der Gewindestangenlängsachse veränderbar. Durch die axiale Fixierung der Gewindestange im anderen Bolzen, ist somit der Abstand der Bolzen zueinander durch Rotation der Gewindestange einstellbar. Die unterschiedliche Beabstandung der Bolzen impliziert eine Rotation des Kraftarms sowie des Lastarms des zweiten Hebels um die zweite Drehachse und somit eine Veränderung des Winkels zwischen Sitzfläche des Sattels und Trägervorrichtung, also der Sattelneigung.

Die Aufgabe wird auch durch ein Verfahren zur ergonomischen Anpassung eines Sattels mittels der Sattelbefestigungseinrichtung gelöst, umfassend die Schritte:
- Montieren der Sattelbefestigungseinrichtung an einem Fahrrad
- Wiederholtes Austauschen des Sattels, mit Hilfe der Sattelbefestigungseinrichtung, bis dieser vom Kunden als angenehm empfunden wird,
- Wiederholtes Ändern der horizontalen Sattelposition relativ zur Trägervorrichtung, durch wiederholtes Lösen und Fixieren des Sattels, mit Hilfe des ersten Hebels der Klemmeinrichtung, bis die ergonomisch korrekte Position des Kunden auf dem Fahrrad erreicht ist
- Wiederholtes Ändern des Winkels des Sattels relativ zur Trägervorrichtung, mit Hilfe der Drehwinkeleinstellvorrichtung, bis die ergonomisch korrekte Position des Kunden auf dem Fahrrad erreicht ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine Übersichtsdarstellung der Sattelbefestigungseinrichtung
- Fig. 2: eine Detaildarstellung der Klemmeinrichtung und der Drehwinkeleinstellvorrichtung
- Fig. 3a: eine Prinzipskizze der Klemmeinrichtung in der Fixierposition
- Fig. 3b: eine Prinzipskizze der Klemmvorrichtung in der Lockerungsposition

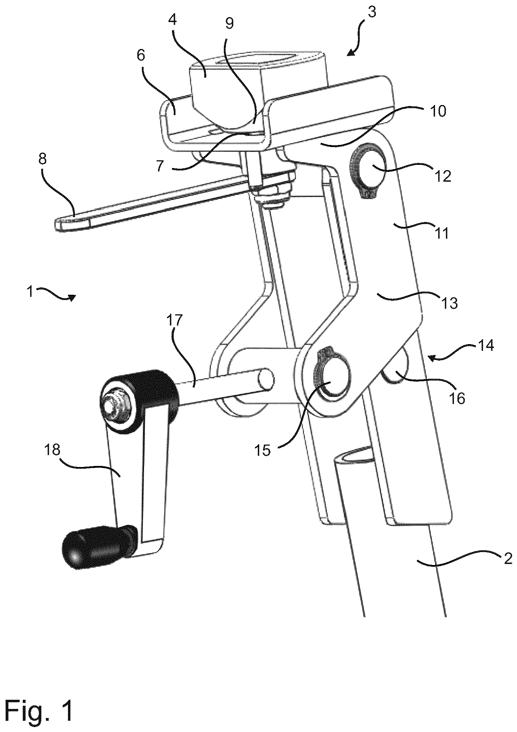

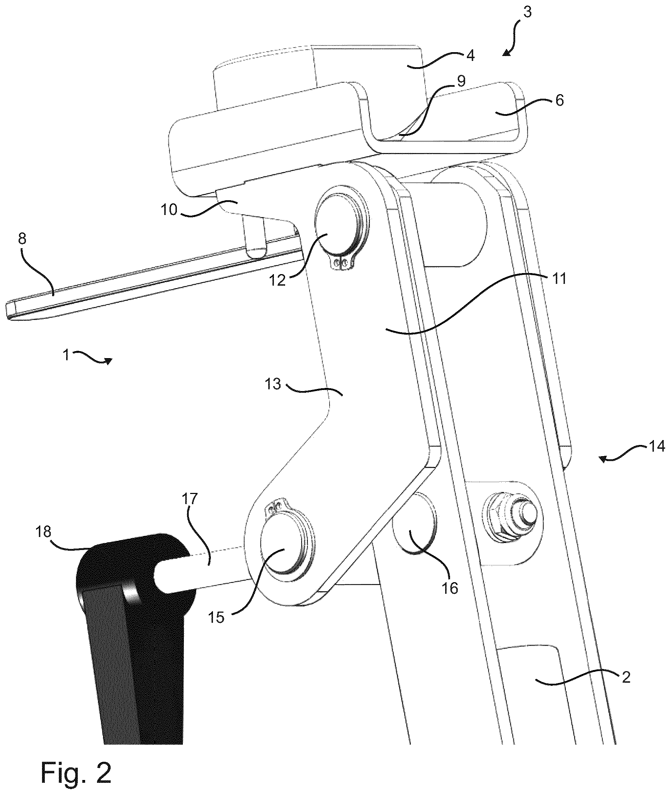

In den Figuren 1- 3b wird eine Sattelbefestigungseinrichtung (1) zur lösbaren Schnellbefestigung eines Stützelements, insbesondere eines Sattels, an einer Trägervorrichtung (2), insbesondere einer Sattelstütze, eines Fahrzeugs, gezeigt. Die Sattelbefestigungseinrichtung (1) umfasst eine Klemmeinrichtung (3), welche mindestens ein Klemmelement (4) zum lösbaren Befestigen mindestens einer Sattelstrebe (5) an der Trägervorrichtung (2) sowie mindestens ein Klemmstützelement (6) zum mechanischen Abstützen des Klemmelements (4) aufweist. Die Sattelbefestigungseinrichtung zeichnet sich dadurch aus, dass das Klemmelement (4) über eine Achse (7) fest mit dem Klemmstützelement (6) verbunden ist und relativ zu dem Klemmstützelement (6) in eine Fixierposition bringbar ist. In der Fixierposition ist zumindest eine Sattelstrebe (5) zwischen dem Klemmelement (4) und dem Klemmstützelement (6) eingeklemmt, wobei das Klemmelement (4), insbesondere werkzeugfrei, in eine Lockerungsposition bringbar ist.

Weiterhin ist das Klemmelement (4) drehbar um zumindest eine erste, mit dem Klemmstützelement (6) verbundene Drehachse (7) gelagert ist.

Mit Hilfe der ersten Drehachse (7) ist das Klemmelement (4) gegenüber dem Klemmstützelement (6) rotierbar. Diese Rotation ermöglicht den Wechsel zwischen Fixier- und Lockerungsposition.

Die Seitenflächen des Klemmelements (4) sind in mindestens einer Richtung schmaler beabstandet als der Abstand der Sattelstreben (5) des Sattels und in mindestens einer Richtung breiter beabstandet als der Abstand der Sattelstreben (5) des Sattels.

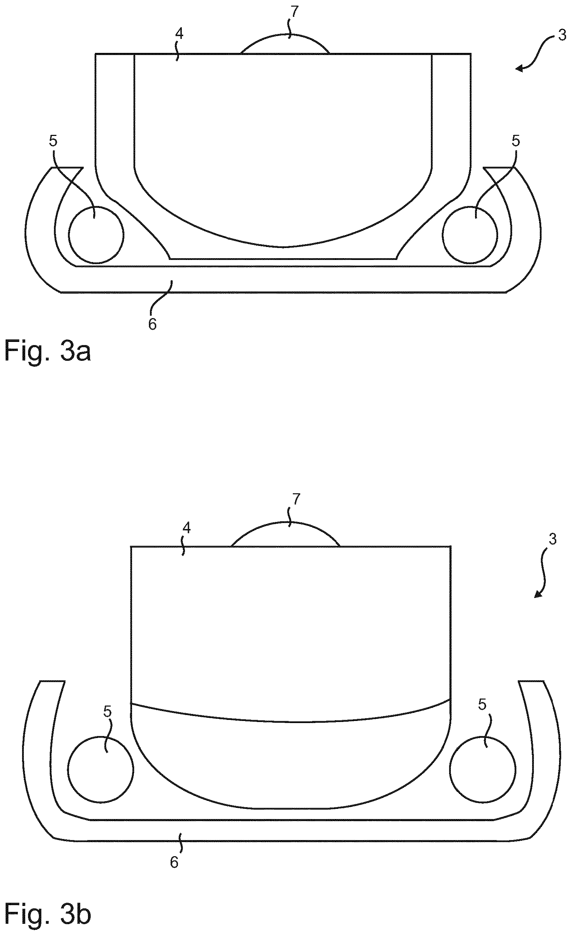

In der Fixierposition (vgl. Figur 3a) sind die, breiter als der Abstand der Sattelstreben (5) beabstandeten, Seitenflächen des Klemmelements (4) parallel zur Fahrzeuglängsachse ausgerichtet. Dadurch werden die Sattelstreben (5) zwischen dem Klemmelement (4), welches in dieser Position breiter als der Abstand der Sattelstreben (5) ist, und dem Klemmstützelement (6) befestigend eingeklemmt.

In der Lockerungsposition (vgl. Figur 3b) sind die, schmaler als der Abstand der Sattelstreben (5) beabstandeten, Seitenflächen des Klemmelements (4) parallel zur Fahrzeuglängsachse ausgerichtet. In dieser Position ist es möglich den Sattel von der Klemmeinrichtung (3) abzuheben, da das Klemmelement (4) in dieser Position schmaler als der Abstand der Sattelstreben (5) ist und die Sattelstreben (5) am Klemmelement (4) vorbeiführbar sind.

Das Klemmelement (4) hat somit bevorzugt eine rechteckige Form mit einer Längsrichtung entlang der längeren Kanten des Rechtecks. Die kürzeren Kanten sind dabei bevorzugt kürzer als der Abstand der Sattelstreben (5) und die längeren Kanten länger als der Abstand der Sattelstreben (5). In der Fixierposition (vgl. Figur 3a) ist die Längsachse des Klemmelements horizontal senkrecht zur Fahrzeuglängsachse ausgerichtet. In der Lockerungsposition (vgl. Figur 3b) ist die Längsachse des Klemmelements parallel zur Fahrzeuglängsachse ausgerichtet. Der Wechsel zwischen Fixier- und Lockerungsposition erfolgt dabei bevorzugt durch eine Rotation des Klemmelements um 90° um die erste Drehachse (7).

Das Klemmelement (4) weist zumindest einen ersten Hebel (8) auf. Mit diesem ersten Hebel (8) ist das Klemmelement (4) von der Fixierposition in die Lockerungsposition und/oder von der Lockerungsposition in die Fixierposition bringbar.

Weiterhin weist das Klemmelement (4) eine obere Grundfläche sowie eine oval, oder vieleckig mit abgerundeten Kanten geformte, untere Grundfläche auf. Dabei ist der Übergang zwischen der oberen und der oval, oder vieleckig mit abgerundeten Kanten geformten, unteren Grundfläche eine Konusfläche (9).

Die Konusfläche (9) des Klemmelements (4) ist konvex gewölbt. Weiterhin kann die Konusfläche auch konkav oder gerade ausgeformt sein.

Die Drehachse (7) der Klemmeinrichtung kann ein Gewinde umfassen.

Weitergehend ist die Klemmeinrichtung (3) auf dem Lastarm (10) eines zweiten Hebels (11) montiert. Dabei ist der zweite Hebel (11) drehbar, um zumindest eine zweite Drehachse (12), an der Trägervorrichtung (2) befestigt.

Weiterhin umfasst der Kraftarm (13) des zweiten Hebels (11) bevorzugt eine Drehwinkeleinstellvorrichtung (14). Mit dieser ist der Winkel zwischen Hebellängsachse Trägervorrichtungslängsachse einstellbar.

Die Drehwinkeleinstellvorrichtung (14) weist zumindest einen ersten sowie einen zweiten drehbar gelagerten Bolzen (15, 16) auf. Dabei ist der erste, drehbar gelagerte Bolzen (15) am zweiten Hebel (11) und der zweite, drehbar gelagerte Bolzen (16) an der Trägervorrichtung (2) befestigt. Beide Bolzen (15, 16) sind durch eine Gewindestange (17), insbesondere ausgestattet mit einem Drehgriff (18), verbunden, mit welcher die Bolzen (15, 16) relativ zueinander bewegbar sind. Bevorzugt entspricht die Drehachse der drehbar gelagerten Bolzen (15, 16) der Bolzenlängsachse. Die Gewindestange (17) ist durch den ersten oder zweiten drehbar gelagerten Bolzen (15, 16) senkrecht zur Bolzenlängsachse hindurchgeführt, wobei die Durchführung des ersten oder zweiten Bolzens bevorzugt ein Innengewinde komplementär zur Gewindestange (17) aufweist. Bevorzugt ist die Gewindestange (17) am anderen Bolzen gegenüber radialer und axialer Bewegung fixiert, beispielsweise mit Hilfe eines Radiaxlagers.

Durch Rotation der Gewindestange mit Hilfe des Drehgriffs (18), welcher auch als Drehrad oder Hebel ausgeführt sein kann, ist die Position des, mit einem Innengewinde ausgestatteten, Bolzens (15) auf der Gewindestangenlängsachse veränderbar. Durch die axiale Fixierung der Gewindestange (17) im anderen Bolzen (16), ist somit der Abstand der Bolzen (15, 16) zueinander durch Rotation der Gewindestange (17) einstellbar. Die unterschiedliche Beabstandung der Bolzen (15, 16) impliziert eine Rotation des Kraftarms (13) sowie des Lastarms (10) des zweiten Hebels (11) um die zweite Drehachse (12) und somit eine Veränderung des Winkels zwischen Sitzfläche des Sattels und Trägervorrichtung (2), also der Sattelneigung.

### Bezugszeichenliste

- 1: Sattelbefestigungseinrichtung
- 2: Trägervorrichtung
- 3: Klemmvorrichtung
- 4: Klemmelement
- 5: Sattelstreben
- 6: Klemmstützelement
- 7: erste Drehachse
- 8: erster Hebel
- 9: Konusfläche
- 10: Lastarm
- 11: zweiter Hebel
- 12: zweite Drehachse
- 13: Kraftarm
- 14: Drehwinkeleinstellvorrichtung
- 15: erster Bolzen
- 16: zweiter Bolzen
- 17: Gewindestange
- 18: Drehgriff

## Patentansprüche

1. Eine Sattelbefestigungseinrichtung (1) zur lösbaren Schnellbefestigung eines Stützelements, insbesondere eines Sattels, an einer Trägervorrichtung (2), insbesondere einer Sattelstütze, eines Fahrzeugs, umfassend eine Klemmeinrichtung (3), welche mindestens ein Klemmelement (4) zum lösbaren Befestigen mindestens einer Sattelstrebe (5) an der Trägervorrichtung (2) sowie mindestens ein Klemmstützelement (6) zum mechanischen Abstützen des Klemmelements (4) aufweist, wobei
das Klemmelement (4) über eine erste Drehachse (7) fest mit dem Klemmstützelement (6) verbunden ist und relativ zu dem Klemmstützelement (6) in eine Fixierposition bringbar ist, in welcher zumindest eine Sattelstrebe (5) zwischen dem Klemmelement (4) und dem Klemmstützelement (6) eingeklemmt ist, wobei das Klemmelement (4) in eine Lockerungsposition bringbar ist, wobei
das Klemmelement (4) zumindest einen ersten Hebel (8) aufweist, mit welchem das Klemmelement (4) von der Fixierposition in die Lockerungsposition und/oder von der Lockerungsposition in die Fixierposition bringbar ist, wobei die Klemmeinrichtung (3) auf einem Lastarm (10) eines zweiten Hebels (11) montiert ist, wobei der zweite Hebel (11) drehbar, um zumindest eine zweite Drehachse (12), an der Trägervorrichtung (2) befestigt ist und wobei ein Kraftarm (13) des zweiten Hebels (11) eine Drehwinkeleinstellvorrichtung (14) umfasst, mit welcher ein Winkel zwischen einer Hebellängsachse und einer Trägervorrichtungslängsachse einstellbar ist,
**dadurch gekennzeichnet, dass**
der erste Hebel (8) fest mit der ersten Drehachse (7) verbunden und wobei durch eine Betätigung des ersten Hebels (8) die erste Drehachse (7) rotierbar ist.

2. Sattelbefestigungseinrichtung (1) nach Anspruch 1,
**dadurch gekennzeichnet, dass**
das Klemmelement (4) drehbar um zumindest die erste, mit dem Klemmstützelement (6) verbundene Drehachse (7) gelagert ist.

3. Sattelbefestigungseinrichtung (1) nach Anspruch 1,
**dadurch gekennzeichnet, dass**
Seitenflächen des Klemmelements (4) in mindestens einer Richtung schmaler beabstandet sind als der Abstand der Sattelstreben (5) des Sattels und in mindestens einer Richtung breiter beabstandet sind als der Abstand der Sattelstreben (5) des Sattels.

4. Sattelbefestigungseinrichtung (1) nach Anspruch 1,
**dadurch gekennzeichnet, dass**
das Klemmelement (4) eine obere Grundfläche sowie eine oval, oder vieleckig mit abgerundeten Kanten geformte, untere Grundfläche aufweist, wobei der Übergang zwischen der oberen und der oval, oder vieleckig mit abgerundeten Kanten geformten, unteren Grundfläche eine Konusfläche (9) ist.

5. Sattelbefestigungseinrichtung nach Anspruch 4,
**dadurch gekennzeichnet, dass**
die Konusfläche (9) des Klemmelements (4) konvex gewölbt ist.

6. Sattelbefestigungseinrichtung nach Anspruch 1,
**dadurch gekennzeichnet, dass**
die erste Drehachse (7) der Klemmeinrichtung (3) ein Gewinde umfasst.

7. Sattelbefestigungseinrichtung (1) nach Anspruch 1,
**dadurch gekennzeichnet, dass**
die Drehwinkeleinstellvorrichtung (14) zumindest einen ersten sowie einen zweiten drehbar gelagerten Bolzen (15, 16) aufweist, wobei der erste, drehbar gelagerte Bolzen (15) am zweiten Hebel (11) und der zweite, drehbar gelagerte Bolzen (16) an der Trägervorrichtung (2) befestigt ist und beide Bolzen (15, 16) durch eine Gewindestange (17), welche insbesondere ausgestattet mit einem Drehgriff (18) ist, verbunden sind, mit welcher die beiden Bolzen (15, 16) relativ zueinander bewegbar sind.

8. Verfahren zur ergonomischen Anpassung von Sätteln mittels der Sattelbefestigungseinrichtung (1) nach den vorhergehenden Ansprüchen, umfassend die Schritte:
a. Montieren der Sattelbefestigungseinrichtung (1) an einem Fahrrad
b. Wiederholtes Austauschen des Sattels, mit Hilfe der Sattelbefestigungseinrichtung (1), bis dieser vom Kunden als angenehm empfunden wird,
c. Wiederholtes Ändern der horizontalen Sattelposition relativ zur Trägervorrichtung (2), durch wiederholtes Lösen und Fixieren des Sattels, mit Hilfe des ersten Hebels (8) der Klemmeinrichtung (3), bis die ergonomisch korrekte Position des Kunden auf dem Fahrrad erreicht ist,
d. Wiederholtes Ändern des Winkels des Sattels relativ zur Trägervorrichtung (2), mit Hilfe der Drehwinkeleinstellvorrichtung (14), bis die ergonomisch korrekte Position des Kunden auf dem Fahrrad erreicht ist.

## Claims

1. A saddle mounting structure (1) for releasable quick mounting of a support element, in particular a saddle, to a carrier device (2), in particular a saddle support, of a vehicle, comprising a clamping device (3) which has at least one clamping element (4) for releasable mounting of at least one saddle strut (5) to the carrier device (2) and at least one clamping support element (6) for mechanical support of the clamping element (4), wherein
the clamping element (4) is fixedly connected to the clamping support element (6) via a first axis of rotation (7) and can be brought into a fixing position relative to the clamping support element (6), in which fixing position at least one saddle strut (5) is clamped between the clamping element (4) and the clamping support element (6), the clamping element (4) being able to be brought into a loosening position, wherein
the clamping element (4) has at least a first lever (8) with which the clamping element (4) can be brought from the fixing position into the loosening position and/or from the loosening position into the fixing position, wherein the clamping device (3) is mounted on a load arm (10) of a second lever (11), wherein the second lever (11) is rotatably mounted, about at least a second axis of rotation (12), on the carrier device (2), and wherein a force arm (13) of the second lever (11) comprises a rotation angle adjustment device (14) with which an angle between a longitudinal lever axis and a longitudinal carrier device axis is adjustable,
**characterized in that**
the first lever (8) is fixedly connected to the first axis of rotation (7) and wherein the first axis of rotation (7) is rotatable by an actuation of the first lever (8).

2. Saddle mounting structure (1) according to claim 1,
**characterized in that**
the clamping element (4) is rotatably mounted about at least the first axis of rotation (7) connected to the clamping support element (6).

3. Saddle mounting structure (1) according to claim 1,
**characterized in that**
side surfaces of the clamping element (4) are spaced narrower in at least one direction than the spacing of the saddle struts (5) of the saddle and are spaced wider in at least one direction than the spacing of the saddle struts (5) of the saddle.

4. Saddle mounting structure (1) according to claim 1,
**characterized in that**
the clamping element (4) has an upper base surface and an oval or polygonal lower base surface with rounded edges, the transition between the upper and the oval or polygonal lower base surface with rounded edges being a conical surface (9).

5. Saddle mounting structure according to claim 4,
**characterized in that**
the conical surface (9) of the clamping element (4) is convexly curved.

6. Saddle mounting structure according to claim 1,
**characterized in that**
the first axis of rotation (7) of the clamping device (3) comprises a thread.

7. Saddle mounting structure (1) according to claim 1,
**characterized in that**
the rotation angle adjustment device (14) has at least a first and a second rotatably mounted bolt (15, 16), the first rotatably mounted bolt (15) being fastened to the second lever (11) and the second rotatably mounted bolt (16) being fastened to the carrier device (2), and both bolts (15, 16) being connected by a threaded rod (17), which is in particular equipped with a rotary handle (18), with which the two bolts (15, 16) can be moved relative to one another.

8. Method for ergonomic fitting of saddles by means of the saddle fitting device (1) according to the preceding claims, comprising the steps:
a. Mounting the saddle mounting structure (1) on a bicycle
b. Repeatedly replacing the saddle, by means of the saddle mounting structure (1), until it is found comfortable by the customer,
c. Repeatedly changing the horizontal saddle position relative to the support device (2), by repeatedly releasing and fixing the saddle, using the first lever (8) of the clamping device (3), until the ergonomically correct position of the customer on the bicycle is achieved,
d. Repeatedly changing the angle of the saddle relative to the support device (2), with the help of the rotation angle adjustment device (14), until the ergonomically correct position of the customer on the bicycle is achieved.

## Revendications

1. Dispositif de fixation de selle (1) pour la fixation rapide détachable d'un élément de support, en particulier d'une selle, sur un dispositif de support (2), en particulier un support de selle, d'un véhicule, comportant un dispositif de serrage (3), lequel présente au moins un élément de serrage (4) pour la fixation détachable d'au moins un rail de selle (5) sur le dispositif de support (2) ainsi qu'au moins un élément de support de serrage (6) pour le support mécanique de l'élément de serrage (4),
l'élément de serrage (4) étant relié de façon fixe à l'élément de support de serrage (6) par l'intermédiaire d'un premier axe de rotation (7) et pouvant être amené dans une position de fixation par rapport à l'élément de support de serrage (6), dans laquelle au moins un rail de selle (5) est serré entre l'élément de serrage (4) et l'élément de support de serrage (6), l'élément de serrage (4) pouvant être amené dans une position de desserrage,
l'élément de serrage (4) présentant au moins un premier levier (8), avec lequel l'élément de serrage (4) peut être amené de la position de fixation dans la position de desserrage et/ou de la position de desserrage dans la position de fixation, le dispositif de serrage (3) étant monté sur un bras de charge (10) d'un second levier (11), le second levier (11) étant fixé de manière rotative, autour d'au moins un second axe de rotation (12), sur le dispositif de support (2) et un bras de force (13) du second levier (11) comportant un dispositif de réglage d'angle de rotation (14) avec lequel un angle entre un axe longitudinal de levier et un axe longitudinal de dispositif de support est réglable,
**caractérisé par le fait que**
le premier levier (8) est relié de façon fixe au premier axe de rotation (7), et où le premier axe de rotation (7) est apte à tourner par un actionnement du premier levier (8).

2. Dispositif de fixation de selle (1) selon la revendication 1,
**caractérisé par le fait que**
l'élément de serrage (4) est monté de manière rotative autour d'au moins le premier axe de rotation (7) relié à l'élément de support de serrage (6).

3. Dispositif de fixation de selle (1) selon la revendication 1,
**caractérisé par le fait que**
des surfaces latérales de l'élément de serrage (4) sont espacées dans au moins une direction de manière plus étroite que la distance des rails de selle (5) de la selle et sont espacées dans au moins une direction de manière plus large que la distance des rails de selle (5) de la selle.

4. Dispositif de fixation de selle (1) selon la revendication 1,
**caractérisé par le fait que**
l'élément de serrage (4) présente une surface de base supérieure ainsi qu'une surface de base inférieure de forme ovale, ou polygonale avec des bords arrondis, la transition entre la surface de base supérieure et la surface de base inférieure de forme ovale, ou polygonale avec des bords arrondis, étant une surface conique (9).

5. Dispositif de fixation de selle selon la revendication 4,
**caractérisé par le fait que**
la surface conique (9) de l'élément de serrage (4) est bombée de manière convexe.

6. Dispositif de fixation de selle selon la revendication 1,
**caractérisé par le fait que**
le premier axe de rotation (7) du dispositif de serrage (3) comporte un filetage.

7. Dispositif de fixation de selle (1) selon la revendication 1,
**caractérisé par le fait que**
le dispositif de réglage d'angle de rotation (14) présente au moins un premier ainsi qu'un second boulon (15, 16) montés de manière rotative, le premier boulon (15), monté de manière rotative, étant fixé au second levier (11) et le second boulon (16), monté de manière rotative, étant fixé au dispositif de support (2), et les deux boulons (15, 16) étant reliés par une tige filetée (17), laquelle en particulier est équipée d'une poignée rotative (18), avec laquelle les deux boulons (15, 16) sont déplaçables l'un par rapport à l'autre.

8. Procédé pour l'adaptation ergonomique de selles au moyen du dispositif de fixation de selle (1) selon l'une des revendications précédentes, comprenant les étapes :
a. montage du dispositif de fixation de selle (1 ) sur un vélo ;
b. échange répété de la selle, à l'aide du dispositif de fixation de selle (1), jusqu'à ce que celle-ci soit perçue comme agréable par le client ;
c. changement répété de la position de selle horizontale par rapport au dispositif de support (2), par desserrage et fixation de manière répétée de la selle, à l'aide du premier levier (8) du dispositif de serrage (3), jusqu'à ce que la position ergonomiquement correcte du client sur le vélo soit atteinte ;
d. changement répété de l'angle de la selle par rapport au dispositif de support (2), à l'aide du dispositif de réglage d'angle de rotation (14), jusqu'à ce que la position ergonomiquement correcte du client sur le vélo soit atteinte.
